(19) **Europäisches Patentamt / European Patent Office / Office européen des brevets**

(11) **EP 3 719 888 B1**

(12) **EUROPEAN PATENT SPECIFICATION**

(45) Date of publication and mention of the grant of the patent:
**05.01.2022 Bulletin 2022/01**

(51) Int Cl.:
*H01M 4/525* (2010.01)     *H01M 4/505* (2010.01)
*C01G 53/00* (2006.01)

(21) Application number: **18883278.6**

(22) Date of filing: **15.11.2018**

(86) International application number:
**PCT/JP2018/042215**

(87) International publication number:
**WO 2019/107160 (06.06.2019 Gazette 2019/23)**

(54) **POSITIVE ELECTRODE ACTIVE MATERIAL FOR NON-AQUEOUS ELECTROLYTE SECONDARY BATTERY, AND METHOD FOR PRODUCING POSITIVE ELECTRODE ACTIVE MATERIAL FOR NON-AQUEOUS ELECTROLYTE SECONDARY BATTERY**

POSITIVELEKTRODENAKTIVMATERIAL FÜR SEKUNDÄRBATTERIE MIT WASSERFREIEM ELEKTROLYTEN UND VERFAHREN ZUR HERSTELLUNG VON POSITIVELEKTRODENAKTIVMATERIAL FÜR SEKUNDÄRBATTERIE MIT WASSERFREIEM ELEKTROLYTEN

MATIÈRE ACTIVE D'ÉLECTRODE POSITIVE POUR BATTERIE SECONDAIRE À ÉLECTROLYTE NON AQUEUX, ET PROCÉDÉ DE FABRICATION DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2017 JP 2017230215**

(43) Date of publication of application:
**07.10.2020 Bulletin 2020/41**

(73) Proprietor: **Panasonic Intellectual Property Management Co., Ltd.**
**Osaka-shi, Osaka 540-6207 (JP)**

(72) Inventors:
• **KANAI, Toshinobu**
  **Osaka-shi**
  **Osaka 540-6207 (JP)**
• **KADOHATA, Tetsuo**
  **Osaka-shi**
  **Osaka 540-6207 (JP)**
• **OGASAWARA, Takeshi**
  **Osaka-shi**
  **Osaka 540-6207 (JP)**

(74) Representative: **Vigand, Philippe et al**
**Novagraaf International SA**
**Chemin de l'Echo 3**
**1213 Onex - Genève (CH)**

(56) References cited:
**WO-A1-2017/018099     WO-A1-2017/038041**
**JP-A- H10 321 224     JP-A- 2017 126 518**
**US-A1- 2013 247 363**

**Description**

TECHNICAL FIELD

The present invention relates to techniques for a positive electrode active material for a non-aqueous electrolyte secondary battery, and for a method for producing a positive electrode active material for a non-aqueous electrolyte secondary battery.

BACKGROUND ART

Recently, a non-aqueous electrolyte secondary battery comprising a positive electrode, a negative electrode and a non-aqueous electrolyte, in which charge/discharge is performed by movement of lithium ions and the like between the positive electrode and the negative electrode, has been used widely as a high-output and high-energy density secondary battery.

The followings are known as positive electrode active materials for use in positive electrodes of non-aqueous electrolyte secondary batteries.

For example, Patent Literature 1 discloses a positive electrode active material for a non-aqueous electrolyte secondary battery, including a lithium-nickel composite oxide represented by general formula $Li_zNi_{1-x-y}Co_xM2_yO_2$ (wherein the ranges of x, y and z values are $0.10 \leq x \leq 0.21$, $0.05 \leq y \leq 0.08$ and $0.98 \leq z \leq 1.10$, respectively, and M2 represents Ti or Mg).

For example, Patent Literature 2 discloses a positive electrode active material for a non-aqueous electrolyte secondary battery, including particles of a lithium-nickel-cobalt composite oxide represented by general formula: $Li_uNi_{1-x-y-z}Co_xAl_yMg_zO_2$ ($1.00 \leq u \leq 1.04$, $0.05 \leq x \leq 0.20$, $0.01 \leq y \leq 0.06$, $0.01 \leq z \leq 0.03$).

CITATION LIST

PATENT LITERATURES

PATENT LITERATURE 1: Japanese Unexamined Patent Application Publication No. 2010-44963
PATENT LITERATURE 2: Japanese Unexamined Patent Application Publication No. 2016-204239

Further, US 2013/247363 A1 discloses a method of making high-energy cathode active materials for primary alkaline batteries as well as a primary alkaline battery including a cathode having an alkali-deficient nickel(IV)-containing oxide including one or more metals such as Co, Mg, Al, Ca, Y, Mn, and/or non-metals such as B, Si, Ge or a combination of metal and/or non-metal atoms as dopants partially substituted for Ni and/or Li in the crystal lattice.

SUMMARY

Meanwhile, in a case where a lithium transition metal oxide including Ni, in which the proportion of Ni relative to the total number of moles of metal element(s) except for Li is 91 mol% or more, is used as a positive electrode active material, a problem is that, although an increase in capacity of a non-aqueous electrolyte secondary battery may be achieved, charge/discharge cycle characteristics are remarkably deteriorated.

It is an advantage of the present disclosure to provide a positive electrode active material for a non-aqueous electrolyte secondary battery, which may allow an increase in capacity of a non-aqueous electrolyte secondary battery to be achieved and allow deterioration in charge/discharge cycle characteristics to be suppressed, and a method for producing the same.

A positive electrode active material for a non-aqueous electrolyte secondary battery according to the present invention includes a lithium transition metal oxide including Ni and Al, wherein a proportion of Ni in the lithium transition metal oxide is 91 mol% to 96 mol% relative to the total number of moles of metal elements except for Li, and a proportion of Al in the lithium transition metal oxide is 4 mol% to 9 mol% relative to the total number of moles of metal elements except for Li, and an amount of Al in a filtrate as quantitatively determined by inductively coupled plasma emission spectrometry is 0.28 mg or less, the filtrate being collected by stirring a sample solution obtained by addition of 1 g of the lithium transition metal oxide to 10 mL of a mixed solution of 100 mL of pure water and 1 mL of 35% hydrochloric acid, and thereafter filtering the sample solution.

A method for producing the positive electrode active material for a non-aqueous electrolyte secondary battery including the lithium transition metal oxide according to the present invention comprises a step of mixing a composite oxide represented by general formula $NixM_{1-x-y}Al_yO_2$, wherein $0.91 \leq x \leq 0.96$, $0.04 \leq y \leq 0.09$, and M includes at least one element selected from the group consisting of Co, W, Nb, Mg, Ti, Mn and Mo, with a Li compound, and firing the resulting mixture at 700°C to 740°C, thereby obtaining the lithium transition metal oxide.

A non-aqueous electrolyte secondary battery according to one aspect of the present disclosure comprises a positive electrode including the positive electrode active material for a non-aqueous electrolyte secondary battery.

According to one aspect of the present disclosure, an increase in capacity of a non-aqueous electrolyte secondary battery may be achieved and deterioration in charge/discharge cycle characteristics may be suppressed.

DESCRIPTION OF EMBODIMENTS

(Findings Underlying Present Disclosure)

As described above, in a case where a lithium transition metal oxide including Ni, in which the proportion of Ni relative to the total number of moles of metal element(s) except for Li is 91 mol% or more, is used as a positive electrode active material, charge/discharge cycle characteristics are remarkably deteriorated. While Al can be generally added to a lithium transition metal oxide including Ni, thereby allowing charge/discharge cycle characteristics to be improved, no effect of improving charge/discharge cycle characteristics may be exerted even if Al is added to a lithium transition metal oxide where the proportion of Ni is 91 mol% or more. The present inventors have studied the reason why such no effect is exerted, and as a result, have found that no effect of improving charge/discharge cycle characteristics is exerted in the case of a large amount of Al unevenly distributed on surfaces of particles of the lithium transition metal oxide, and therefore have conceived a positive electrode active material for a non-aqueous electrolyte secondary battery according to each aspect described below.

A positive electrode active material for a non-aqueous electrolyte secondary battery according to the present invention includes a lithium transition metal oxide including Ni and Al, wherein the proportion of Ni in the lithium transition metal oxide is 91 mol% to 96 mol% relative to the total number of moles of metal elements except for Li, and the proportion of Al in the lithium transition metal oxide is 4 mol% to 9 mol% relative to the total number of moles of metal elements except for Li, and the amount of Al in a filtrate as quantitatively determined by inductively coupled plasma emission spectrometry is 0.28 mg or less, the filtrate being collected by stirring a sample solution obtained by addition of 1 g of the lithium transition metal oxide to 10 mL of a mixed solution of 100 mL of pure water and 1 mL of 35% hydrochloric acid, and thereafter filtering the sample solution. The amount of Al in the filtrate here represents the amount of Al eluted from the lithium transition metal oxide, and a small amount of Al in the filtrate indicates a small amount of Al on surfaces of particles of the lithium transition metal oxide. On the other hand, a large amount of Al in the filtrate indicates a large amount of Al on surfaces of particles of the lithium transition metal oxide. A lithium transition metal oxide where the proportion of Ni is 91 mol% to 96 mol%, the proportion of Al is 4 mol% to 9 mol%, and the amount of Al in the filtrate is 0.28 mg or less is small in amount of Al present on surfaces of particles of the lithium transition metal oxide, and allows suppression of deterioration in charge/discharge cycle characteristics to be realized. The lithium transition metal oxide also enables an increase in capacity of a battery to be achieved because the proportion of Ni is 91 mol% to 96 mol%.

Hereinafter, one example of a non-aqueous electrolyte secondary battery using the positive electrode active material for a non-aqueous electrolyte secondary battery according to one aspect of the present disclosure will be described.

A non-aqueous electrolyte secondary battery according to one example of an embodiment comprises a positive electrode, a negative electrode and a non-aqueous electrolyte. A separator is suitably provided between the positive electrode and the negative electrode. Specifically, the secondary battery has a structure where a wound electrode assembly formed by winding the positive electrode and the negative electrode with the separator being interposed therebetween, and the non-aqueous electrolyte are housed in an outer package. The electrode assembly is not limited to such a wound electrode assembly, and other form of an electrode assembly, such as a stacked electrode assembly formed by stacking the positive electrode and the negative electrode with the separator being interposed therebetween, may also be applied. The form of the non-aqueous electrolyte secondary battery is not particularly limited, and examples can include cylindrical, square, coin, button, and laminated forms.

Hereinafter, the positive electrode, the negative electrode, the non-aqueous electrolyte and the separator for use in the non-aqueous electrolyte secondary battery according to one example of an embodiment will be described in detail.

<Positive Electrode>

The positive electrode is configured from, for example, a positive electrode current collector such as metal foil and a positive electrode active material layer formed on the positive electrode current collector. The positive electrode current collector which can be here used is, for example, any foil of a metal which is stable in the potential range of the positive electrode, such as aluminum, or any film obtained by placing such a metal on a surface layer. The positive electrode active material layer includes, for example, a positive electrode active material, a binder, a conductive agent, and the like.

The positive electrode is obtained by, for example, applying a positive electrode mixture slurry including a positive electrode active material, a binder, a conductive agent, and the like onto the positive electrode current collector and drying the resultant, thereby forming a positive electrode active material layer on the positive electrode current collector, and rolling the positive electrode active material layer.

The positive electrode active material includes a lithium transition metal oxide including Ni and Al. The proportion of Ni in the lithium transition metal oxide is 91 mol% to 96 mol% relative to the total number of moles of metal elements except for Li. The proportion of Al in the lithium transition metal oxide is 4 mol% to 9 mol% relative to the total number of moles of metal elements except for Li. The amount of Al in a filtrate as quantitatively determined by inductively coupled plasma emission spectrometry is 0.28 mg or less, preferably 0.25 mg or less, further preferably 0.20 mg or less, the filtrate being collected by stirring a sample solution obtained by addition of 1 g of the lithium transition metal oxide to 10 mL of a mixed solution of 100 mL of pure water and 1 mL of 35% hydrochloric acid for precise analysis, manufactured by Kishida Chemical Co., Ltd., and thereafter filtering the sample solution. The stirring time is preferably a time so that no change in the amount of Al in the filtrate is observed, and is, for example, 5 minutes, more preferably 10 minutes. The positive electrode active material including the lithium transition metal oxide can be used to thereby allow an increase in capacity of a non-aqueous electrolyte secondary battery to be achieved and allow deterioration in charge/discharge cycle characteristics to be suppressed.

The lithium transition metal oxide is represented by, for example, the following general formula.

$$Li_zNi_xM_{1-x-y}Al_yO_2 \qquad (1)$$

In the formula, x representing the proportion of Ni in the lithium transition metal oxide may satisfy $0.91 \leq x \leq 0.96$, and preferably satisfies $0.91 \leq x \leq 0.94$ from the viewpoint of, for example, more suppression of deterioration in charge/discharge cycle characteristics. A case where x is less than 0.91 results in a reduction in capacity of a non-aqueous electrolyte secondary battery, as compared with a case where x satisfies the above range, and a case where x is more than 0.96 causes a stable crystal structure not to be kept and causes charge/discharge cycle characteristics to be deteriorated, as compared with a case where x satisfies the above range.

In the formula, y representing the proportion of Al in the lithium transition metal oxide may satisfy $0.04 \leq y \leq 0.09$, and preferably satisfies $0.04 \leq y \leq 0.06$ from the viewpoint of, for example, more suppression of deterioration in charge/discharge cycle characteristics. A case where y is less than 0.04 causes charge/discharge cycle characteristics to be deteriorated, as compared with a case where y satisfies the above range, and a case where y is more than 0.09, the proportion of Ni is reduced to result in a reduction in capacity of a non-aqueous electrolyte secondary battery, as compared with a case where y satisfies the above range.

M described above is not particularly limited as long as M is any element other than Li, Ni, and Al, and examples thereof include at least one element selected from the group consisting of Co, Mn, Fe, Mg, Ti, Cr, Cu, Ze, Sn, Zr, Nb, Mo, Ta, W, Na, K, Ba, Sr, Bi, Be, Zn, Ca and B. In particular, M described above is preferably at least one element selected from the group consisting of Co, W, Nb, Mg, Ti, Mn and Mo from the viewpoint of suppression of deterioration in charge/discharge cycle characteristics.

In the formula, (1-x-y) representing the proportion of M in the lithium transition metal oxide preferably satisfies $y \geq 2(1-x-y)$ or $(1-x-y) = 0$. A case where (1-x-y) does not satisfy the above range may cause charge/discharge cycle characteristics to be deteriorated, as compared with a case where the above range is satisfied.

In the formula, z representing the proportion of Li in the lithium transition metal oxide preferably satisfies $0.95 \leq z \leq 1.10$, more preferably satisfies $0.98 \leq z \leq 1.05$. A case where z is less than 0.98 may result in a reduction in capacity, as compared with a case where z satisfies the above range. A case where z is more than 1.05 causes a larger amount of a Li compound to be added and thus is not sometimes economic in terms of production cost, as compared with a case where z satisfies the above range.

The average particle size of the lithium transition metal oxide is not particularly limited, and is, for example, preferably 2 μm to 40 μm, more preferably 4 μm to 20 μm. A case where the average particle size of the lithium transition metal oxide is less than 2 μm may result in a reduction in packing density and a reduction in capacity of a non-aqueous electrolyte secondary battery, as compared with a case where the above range is satisfied. A case where the average particle size of the lithium transition metal oxide is more than 40 μm may result in a reduction in output of a non-aqueous electrolyte secondary battery, as compared with a case where the above range is satisfied. The average particle size here corresponds to the volume average particle size obtained by measurement according to a laser diffraction method, and means a median size at a volume accumulated value of 50% in a particle size distribution. The average particle size can be measured using, for example, a laser diffraction scattering particle size distribution measuring apparatus (manufactured by Horiba Ltd.).

The content of the lithium transition metal oxide relative to the total amount of the positive electrode active material is, for example, preferably 30% by mass or more and 100% by mass or less, more preferably 80% by mass or more and 95% by mass or less. A case where the content of the lithium transition metal oxide is less than 30% by mass may cause, for example, the respective effects of an increase in capacity of a non-aqueous electrolyte secondary battery and of suppression of deterioration in charge/discharge cycle characteristics to be decreased, as compared with the above range is satisfied. The positive electrode active material may here include any Li composite oxide other than the lithium transition metal oxide, and examples include a Li composite oxide containing no Ni, such as $LiCoO_2$ and $LiMn_2O_4$, and a Li composite oxide where the proportion of Ni relative to the total number of moles of metal element(s) except for Li is less than 91 mol%.

The method for producing the lithium transition metal oxide, which may be here appropriately adopted, is any method so that the proportion of Ni is 91 mol% to 96 mol% relative to the total number of moles of metal elements except for Li, the proportion of Al is 4 mol% to 9 mol% relative to the total number of moles of metal elements except for Li, and the amount of Al in the filtrate is 0.28 mg or less.

The lithium transition metal oxide can be produced by one example of the method for producing the lithium transition metal oxide, the method involving mixing a composite oxide including predetermined amounts of Ni and Al with a Li compound and firing the resulting mixture at 700°C to 740°C. The Li compound is not particularly limited, and examples thereof include lithium carbonate and lithium hydroxide.

The composite oxide including predetermined amounts of Ni and Al may be any composite oxide where the proportion of Ni and the proportion of Al in the composite oxide are 91 mol% to 96 mol% and 4 mol% to 9 mol%, respectively, and a composite oxide represented by general formula $NixM_{1-x-y}Al_yO_2$ ($0.91 \leq x \leq 0.96$, $0.04 \leq y \leq 0.09$, and M includes at least one element selected from the group consisting of Co, W, Nb, Mg, Ti, Mn and Mo) is preferably used therefor. The composite oxide represented by the general formula may be used to thereby suitably form a lithium transition metal oxide where the amount of Al in the filtrate is 0.28 mg or less.

The compounding ratio between the composite oxide including predetermined amounts of Ni and Al and the Li compound may be appropriately determined so that each element in a Li transition metal oxide finally obtained is compounded at a desired proportion.

The firing temperature of the mixture of the composite oxide including predetermined amounts of Ni and Al with the Li compound may be 700°C to 740°C and is preferably 705°C to 730°C. In a case where the proportion of Ni is 94 mol% or more, the firing temperature is preferably 705°C to 725°C. The firing temperature can be in the range to thereby allow for formation of a lithium transition metal oxide where the amount of Al in the filtrate is 0.28 mg or less. In a case where the firing temperature is less than 700°C or more than 740°C, the amount of Al unevenly distributed on surfaces of particles of the lithium transition metal oxide is increased, thereby not enabling a lithium transition metal oxide, where the amount of Al in the filtrate is 0.28 mg or less, to be formed. That is, a firing temperature other than 700°C to 740°C cannot provide any lithium transition metal oxide where the proportion of Ni is 91 mol% to 96 mol%, the proportion of Al is 4 to 9 mol%, and the amount of Al in the filtrate is 0.28 mg or less. The firing is preferably performed in an oxygen atmosphere. A firing temperature of less than 700°C causes an increase in reaction resistance, a reduction in discharge capacity, and deterioration in charge/discharge cycle characteristics.

The composite oxide including predetermined amounts of Ni and Al includes, for example, a first step of obtaining a composite hydroxide including Ni and Al, and a second step of firing such a composite hydroxide of Ni and Al to thereby obtain a composite oxide including Ni and Al.

In the first step, for example, the composite hydroxide including Ni and Al is precipitated (co-precipitated) by, with dropping and stirring of an aqueous solution of a Ni salt and an Al salt, dropping a solution of an alkali such as sodium hydroxide and adjusting the pH to an alkaline value (for example, 8.5 to 11.5). The Ni salt and the Al salt are not particularly limited, and examples include sulfate, chloride, nitrate, and aluminate.

The amounts of the Ni salts and the Al salts to be used may be appropriately determined so that each element in the composite oxide is compounded at a desired proportion.

The firing temperature of the composite hydroxide including Ni and Al in the second step is preferably, for example, 500°C to 600°C.

Hereinafter, other materials included in the positive electrode active material layer will be described.

Examples of the conductive agent included in the positive electrode active material layer include carbon powders of carbon black, acetylene black, ketjen black, and graphite. These may be used singly or in combinations of two or more kinds thereof.

Examples of the binder included in the positive electrode active material layer include a fluoropolymer and a rubber-based polymer. Examples of the fluoropolymer include polytetrafluoroethylene (PTFE), polyvinylidene fluoride (PVdF), or any modified product thereof, and examples of the rubber-based polymer include an ethylene-propylene-isoprene copolymer and an ethylene-propylene-butadiene copolymer. These may be used singly or in combinations of two or more kinds thereof.

<Negative Electrode>

The negative electrode comprises, for example, a negative electrode current collector such as metal foil and a negative electrode active material layer formed on the negative electrode current collector. The negative electrode current collector which can be here used is, for example, any foil of a metal which is stable in the potential range of the negative electrode, such as copper, or any film obtained by placing such a metal on a surface layer. The negative electrode active material layer includes, for example, a negative electrode active material, a binder, a thickener, and the like.

The negative electrode is obtained by, for example, applying a negative electrode mixture slurry including a negative electrode active material, a thickener, and a binder onto the negative electrode current collector and drying the resultant, thereby forming a negative electrode active material layer on the negative electrode current collector, and rolling the negative electrode active material layer.

The negative electrode active material included in the negative electrode active material layer is not particularly limited as long as the material can occlude and release lithium ions, and examples thereof include a carbon material, a metal which can form an alloy together with lithium, or an alloy compound including such a metal. The carbon material which can be here used is, for example, any of graphites such as natural graphite, non-graphitizable carbon and artificial graphite, and cokes, and examples of the alloy compound include any compound including at least one metal which can form an alloy together with lithium. Such an element which can form an alloy together with lithium is preferably silicon or tin, and silicon oxide, tin oxide or the like obtained by binding such an element to oxygen can also be used. A mixed product of the carbon material with a silicon or tin compound can be used. Any other than the above can also be used where the charge/discharge potential to metallic lithium such as lithium titanate is higher than that of the carbon material or the like.

The binder included in the negative electrode active material layer, which can here be used, is for example, a fluoropolymer or a rubber-based polymer, as in the case of the positive electrode, and a styrene-butadiene copolymer (SBR) or a modified product thereof may also be used. The binder included in the negative electrode active material layer, which can here be used, is for example, a fluororesin, PAN, a polyimide-based resin, an acrylic resin, or a polyolefin-based resin, as in the case of the positive electrode. In a case where the negative electrode mixture slurry is prepared by use of an aqueous solvent, styrene-butadiene rubber (SBR), CMC or a salt thereof, polyacrylic acid (PAA) or a salt thereof (PAA-Na, PAA-K or the like, alternatively, a partially neutralized salt may be adopted), polyvinyl alcohol (PVA), or the like is preferably used.

Examples of the thickener included in the negative electrode active material layer include carboxymethylcellulose (CMC) and polyethylene oxide (PEO). These may be used singly or in combinations of two or more kinds thereof.

<Non-Aqueous Electrolyte>

The non-aqueous electrolyte includes a non-aqueous solvent and an electrolyte salt dissolved in the non-aqueous solvent. The non-aqueous electrolyte is not limited to a liquid electrolyte (non-aqueous electrolytic solution), and may be a solid electrolyte using a gel-like polymer or the like. The non-aqueous solvent which can be used is, for example, any of esters, ethers, nitriles such as acetonitrile, amides such as dimethylformamide, and a mixed solvent of two or more kinds thereof. The non-aqueous solvent may contain a halogen-substituted product obtained by at least partially replacing hydrogen in such a solvent with a halogen atom such as fluorine.

Examples of the esters include cyclic carbonates such as ethylene carbonate (EC), propylene carbonate (PC) and butylene carbonate, linear carbonates such as dimethyl carbonate (DMC), ethyl methyl carbonate (EMC), diethyl carbonate (DEC), methyl propyl carbonate, ethyl propyl carbonate and methyl isopropyl carbonate, cyclic carboxylates such as $\gamma$-butyrolactone (GBL) and $\gamma$-valerolactone (GVL), and linear carboxylates such as methyl acetate, ethyl acetate, propyl acetate, methyl propionate (MP), ethyl propionate and $\gamma$-butyrolactone.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol and crown ether, and linear ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether and tetraethylene glycol dimethyl ether.

Any of a fluorinated cyclic carbonate such as fluoroethylene carbonate (FEC), and a fluorinated linear carboxylate such as fluorinated linear carbonate or fluoropropionic acid methyl ester (FMP) is preferably used as the halogen-substituted product.

The electrolyte salt is preferably a lithium salt. Examples of the lithium salt include $LiBF_4$, $LiClO_4$, $LiPF_6$, $LiAsF_6$,

LiSbF$_6$, LiAlCl$_4$, LiSCN, LiCF$_3$SO$_3$, LiCF$_3$CO$_2$, Li(P(C$_2$O$_4$)F$_4$), LiPF$_{6-x}$(C$_n$F$_{2n+1}$)$_x$ (1 < x < 6, and n is 1 or 2), LiB$_{10}$Cl$_{10}$, LiCl, LiBr, LiI, lithium chloroborane, lithium lower aliphatic carboxylate, borates such as Li$_2$B$_4$O$_7$ and Li(B(C$_2$O$_4$)F$_2$), and imide salts such as LiN(SO$_2$CF$_3$)$_2$ and LiN(C$_l$F$_{2l+1}$SO$_2$)(C$_m$F$_{2m+1}$SO$_2$) {1 and m are each an integer of 0 or more}. Such lithium salts may be used singly or in combinations of two or more kinds thereof. In particular, LiPF$_6$ is preferably used from the viewpoints of ion conductivity, electrochemical stability, and the like. The concentration of the lithium salt is preferably 0.8 to 1.8 mol per liter of the non-aqueous solvent.

<Separator>

The separator here used is, for example, a porous sheet having ion permeability and insulating properties. Examples of the porous sheet include a microporous thin film, a woven cloth, and an unwoven cloth. The material of the separator is suitably an olefin-based resin such as polyethylene or polypropylene, cellulose, or the like. The separator here used may be a stacked article having a cellulose fiber layer and a thermoplastic resin fiber layer of an olefin-based resin or the like, or may be one obtained by applying an aramid resin or the like to the surface of the separator. A filler layer including an inorganic filler may also be formed at the interface between the separator and at least one of the positive electrode and the negative electrode. Examples of the inorganic filler include an oxide containing at least one of titanium (Ti), aluminum (Al), silicon (Si) and magnesium (Mg), a phosphoric acid compound, and such a compound whose surface is treated with a hydroxide or the like. The filler layer can be formed by, for example, applying a slurry containing the filler onto the surface of the positive electrode, the negative electrode or the separator.

EXAMPLES

Hereinafter, the present invention will be further described with reference to Examples, but the present invention is not intended to be limited to such Examples.

<Example 1>

[Production of Positive Electrode Active Material]

A composite hydroxide represented by [Ni$_{0.91}$Co$_{0.03}$Al$_{0.06}$](OH)$_2$, obtained according to a coprecipitation method, was fired at 500°C for 2 hours, thereby obtaining a composite oxide including Ni, Co and Al (Ni$_{0.91}$Co$_{0.03}$Al$_{0.06}$O$_2$).
The composite oxide including Ni, Co and Al was mixed with LiOH so that the molar ratio of the total amount of Ni, Co and Al to the amount of Li was 1:1.02. The mixture was fired in an oxygen atmosphere at 740°C for 3.5 hours, thereby obtaining a lithium transition metal oxide including Ni, Co and Al (Li$_{1.02}$Ni$_{0.91}$Co$_{0.03}$Al$_{0.06}$O$_2$).
A sample solution obtained by addition of 1 g of the lithium transition metal oxide to a 10 mL of a mixed solution of 100 mL of pure water and 1 mL of 35% hydrochloric acid (for precise analysis, manufactured by Kishida Chemical Co., Ltd.) was stirred at room temperature for 10 minutes (hot stirrer REXIM RSH-4DN: setting speed: 200 rpm). The sample solution after such stirring was filtered (filtration apparatus: reusable polysulfone filter unit; filter: Omnipore membrane 47 mm$\varphi$, 0.45 $\mu$m, manufactured by Millipore Corporation; filtration pump: LV-140A manufactured by Nitto Kohki Co., Ltd.), and a filtrate was collected. The amount of Al in the filtrate was quantitatively determined by inductively coupled plasma emission spectrometry (SPS3100 manufactured by Seiko Instruments Inc.), and as a result, was 0.150 mg.

[Production of Positive Electrode]

After the positive electrode active material, carbon black as a conductive agent and polyvinylidene fluoride as a binder were mixed at a mass ratio of 100:10:3, N-methyl-2-pyrrolidone was added thereto, thereby preparing a positive electrode mixture slurry. Next, the positive electrode mixture slurry was applied to both surface of a positive electrode current collector made of aluminum foil, and the resultant was dried and thereafter rolled with a rolling roller, thereby producing a positive electrode where a positive electrode active material layer was formed on both surfaces of the positive electrode current collector.

[Production of Negative Electrode]

A negative electrode mixture slurry using artificial graphite as a negative electrode active material, a thickener and a binder was applied onto both surfaces of a negative electrode current collector made of copper foil, and the resultant was dried and thereafter rolled with a rolling roller, thereby producing a negative electrode where a negative electrode active material layer was formed on both surfaces of the negative electrode current collector.

[Preparation of Non-Aqueous Electrolytic Solution]

Lithium hexafluorophosphate ($LiPF_6$) was dissolved at a concentration of 1 mol/L in a mixed solvent obtained by mixing ethylene carbonate (EC) and ethyl methyl carbonate (EMC) at a volume ratio of 3:7, thereby preparing a non-aqueous electrolyte.

[Production of Battery]

A positive electrode current collector tab was attached to the positive electrode produced, a negative electrode current collector tab was attached to the negative electrode produced, and a separator was placed between both the electrodes and wound in a spiral manner, thereby producing a spiral electrode assembly. Next, the spiral electrode assembly and the non-aqueous electrolytic solution were placed in an outer package made of an aluminum laminate, and the outer edge of the outer package made of an aluminum laminate was heated and thus welded, thereby producing a non-aqueous electrolyte secondary battery.

<Example 2>

A composite hydroxide represented by $[Ni_{0.94}Co_{0.02}Al_{0.04}](OH)_2$, obtained according to a coprecipitation method, was fired at 500°C for 2 hours, thereby obtaining a composite oxide including Ni, Co and Al ($Ni_{0.94}Co_{0.02}Al_{0.04}O_2$).

The composite oxide including Ni, Co and Al was mixed with LiOH so that the molar ratio of the total amount of Ni, Co and Al to the amount of Li was 1:1.02. The mixture was fired in an oxygen atmosphere at 700°C for 3.5 hours, thereby obtaining a lithium transition metal oxide including Ni, Co and Al ($Li_{1.02}Ni_{0.94}Co_{0.02}Al_{0.04}O_2$).

The amount of Al in the filtrate with respect to the resulting lithium transition metal oxide was quantitatively determined by the same method as in Example 1, and as a result, was 0.183 mg. The lithium transition metal oxide was used to produce a non-aqueous electrolyte secondary battery in the same manner as in Example 1.

<Example 3>

The same manner as in Example 2 was conducted except that the mixture of a composite oxide including Ni, Co and Al with LiOH was fired in an oxygen atmosphere at 720°C for 3.5 hours, thereby obtaining a lithium transition metal oxide including Ni, Co and Al ($Li_{1.02}Ni_{0.94}Co_{0.02}Al_{0.04}O_2$).

The amount of Al in the filtrate with respect to the resulting lithium transition metal oxide was quantitatively determined by the same method as in Example 1, and as a result, was 0.235 mg. The lithium transition metal oxide was used to produce a non-aqueous electrolyte secondary battery in the same manner as in Example 1.

<Example 4>

A composite hydroxide represented by $[Ni_{0.94}Co_{0.01}Al_{0.05}](OH)_2$, obtained according to a coprecipitation method, was fired at 500°C for 2 hours, thereby obtaining a composite oxide including Ni, Co and Al ($Ni_{0.94}Co_{001}Al_{0.05}O_2$).

The composite oxide including Ni, Co and Al was mixed with LiOH so that the molar ratio of the total amount of Ni, Co and Al to the amount of Li was 1:1.02. The mixture was fired in an oxygen atmosphere at 700°C for 3.5 hours, thereby obtaining a lithium transition metal oxide including Ni, Co and Al ($Li_{1.02}Ni_{0.94}Co_{0.01}Al_{0.05}O_2$).

The amount of Al in the filtrate with respect to the resulting lithium transition metal oxide was quantitatively determined by the same method as in Example 1, and as a result, was 0.082 mg. The lithium transition metal oxide was used to produce a non-aqueous electrolyte secondary battery in the same manner as in Example 1.

<Example 5>

The same manner as in Example 4 was conducted except that the mixture of a composite oxide including Ni, Co and Al with LiOH was fired in an oxygen atmosphere at 720°C for 3.5 hours, thereby obtaining a lithium transition metal oxide including Ni, Co and Al ($Li_{1.02}Ni_{0.94}Co_{0.01}Al_{0.05}O_2$).

The amount of Al in the filtrate with respect to the resulting lithium transition metal oxide was quantitatively determined by the same method as in Example 1, and as a result, was 0.119 mg. The lithium transition metal oxide was used to produce a non-aqueous electrolyte secondary battery in the same manner as in Example 1.

<Example 6>

A composite hydroxide represented by $[Ni_{0.94}Al_{0.06}](OH)_2$, obtained according to a coprecipitation method, was fired at 500°C for 2 hours, thereby obtaining a composite oxide including Ni and Al ($Ni_{0.94}Al_{0.06}O_2$).

The composite oxide including Ni and Al was mixed with LiOH so that the molar ratio of the total amount of Ni and Al to the amount of Li was 1:1.02. The mixture was fired in an oxygen atmosphere at 740°C for 3.5 hours, thereby obtaining a lithium transition metal oxide including Ni and Al ($Li_{1.02}Ni_{0.94}Al_{0.06}O_2$).

The amount of Al in the filtrate with respect to the resulting lithium transition metal oxide was quantitatively determined by the same method as in Example 1, and as a result, was 0.215 mg. The lithium transition metal oxide was used to produce a non-aqueous electrolyte secondary battery in the same manner as in Example 1.

<Comparative Example 1>

The same manner as in Example 1 was conducted except that the mixture of a composite oxide including Ni, Co and Al with LiOH was fired in an oxygen atmosphere at 760°C for 3.5 hours, thereby obtaining a lithium transition metal oxide including Ni, Co and Al. The amount of Al in the filtrate with respect to the resulting lithium transition metal oxide was quantitatively determined by the same method as in Example 1, and as a result, was 0.285 mg. The lithium transition metal oxide was used to produce a non-aqueous electrolyte secondary battery in the same manner as in Example 1.

<Comparative Example 2>

A composite hydroxide represented by $[Ni_{0.88}Co_{0.09}Al_{0.03}](OH)_2$, obtained according to a coprecipitation method, was fired at 500°C for 2 hours, thereby obtaining a composite oxide including Ni, Co and Al ($Ni_{0.88}Co_{0.09}Al_{0.03}O_2$).

The composite oxide including Ni, Co and Al was mixed with LiOH so that the molar ratio of the total amount of Ni, Co and Al to the amount of Li was 1:1.02. The mixture was fired in an oxygen atmosphere at 760°C for 3.5 hours, thereby obtaining a lithium transition metal oxide including Ni, Co and Al ($Li_{1.02}Ni_{0.88}Co_{0.09}Al_{0.03}O_2$).

The amount of Al in the filtrate with respect to the resulting lithium transition metal oxide was quantitatively determined by the same method as in Example 1, and as a result, was 0.123 mg. The lithium transition metal oxide was used to produce a non-aqueous electrolyte secondary battery in the same manner as in Example 1.

<Comparative Example 3>

A composite hydroxide represented by $[Ni_{0.97}Al_{0.03}](OH)_2$, obtained according to a coprecipitation method, was fired at 500°C for 2 hours, thereby obtaining a composite oxide including Ni and Al ($Ni_{0.97}Al_{0.03}O_2$).

The composite oxide including Ni and Al was mixed with LiOH so that the molar ratio of the total amount of Ni and Al to the amount of Li was 1:1.02. The mixture was fired in an oxygen atmosphere at 740°C for 3.5 hours, thereby obtaining a lithium transition metal oxide including Ni and Al ($Li_{1.02}Ni_{0.97}Al_{0.03}O_2$).

The amount of Al in the filtrate with respect to the resulting lithium transition metal oxide was quantitatively determined by the same method as in Example 1, and as a result, was 0.153 mg. The lithium transition metal oxide was used to produce a non-aqueous electrolyte secondary battery in the same manner as in Example 1.

<Comparative Example 4>

A composite hydroxide represented by $[Ni_{0.94}Co_{0.02}Al_{0.04}](OH)_2$, obtained according to a coprecipitation method, was fired at 500°C for 2 hours, thereby obtaining a composite oxide including Ni, Co and Al ($Ni_{0.94}Co_{0.02}Al_{0.04}O_2$).

The composite oxide including Ni, Co and Al was mixed with LiOH so that the molar ratio of the total amount of Ni, Co and Al to the amount of Li was 1:1.02. The mixture was fired in an oxygen atmosphere at 760°C for 3.5 hours, thereby obtaining a lithium transition metal oxide including Ni, Co and Al ($Li_{1.02}Ni_{0.94}Co_{0.02}Al_{0.04}O_2$).

The amount of Al in the filtrate with respect to the resulting lithium transition metal oxide was quantitatively determined by the same method as in Example 1, and as a result, was 0.399 mg. The lithium transition metal oxide was used to produce a non-aqueous electrolyte secondary battery in the same manner as in Example 1.

[Measurement of Battery Capacity]

After each battery of Examples and Comparative Examples was subjected to constant current charge at a constant current of 0.3 It under an environmental temperature of 25°C until the battery voltage reached 4.2 V, the battery was subjected to constant voltage charge until the current value reached 0.02 It, and subjected to constant current discharge at a constant current of 0.2 It until the battery voltage reached 2.5 V. The discharge capacity here was defined as the battery capacity.

[Measurement of Capacity Retention in Charge/Discharge Cycle]

Each battery of Examples and Comparative Examples was subjected to the above charge/discharge for 100 cycles. A standing time of 10 minutes was here put after charge and discharge of each of the cycles. The capacity retention in the charge/discharge cycle of such each battery of Examples and Comparative Examples was determined according to the following expression. A higher value indicated that deterioration in charge/discharge cycle characteristics was more suppressed.

$$\text{Capacity retention} = (\text{Discharge capacity at } 100^{\text{th}} \text{ cycle/Discharge capacity at } 1^{\text{st}} \text{ cycle}) \times 100$$

Table 1 and Table 2 showed the proportion of each element in the lithium transition metal oxides used in Examples and Comparative Examples, the amount of Al in each filtrate, the firing temperature of the mixture of a composite oxide including Ni and Al with LiOH, and the results of the battery capacity and the capacity retention in the charge/discharge cycle of each battery of Examples and Comparative Examples.

[Table 1]

| | Lithium transition metal oxide | | | | | Battery characteristics | |
| | Element ratio | | | Amount of Al in filtrate (mg) | Firing temperature of mixture (°C) | Battery capacity (mAh/g) | Capacity retention (%) |
| | Ni | Co | Al | | | | |
| Example 1 | 0.91 | 0.03 | 0.06 | 0.150 | 740 | 200 | 92 |
| Comparative Example 1 | 0.91 | 0.03 | 0.06 | 0.285 | 760 | 200 | 69 |
| Comparative Example 2 | 0.88 | 0.09 | 0.03 | 0.123 | 760 | 196 | 92 |
| Comparative Example 3 | 0.97 | - | 0.03 | 0.153 | 740 | 205 | 62 |

[Table 2]

| | Lithium transition metal oxide | | | | | Battery characteristics | |
| | Element ratio | | | Amount of Al in filtrate (mg) | Firing temperature of mixture (°C) | Battery capacity (mAh/g) | Capacity retention (%) |
| | Ni | Co | Al | | | | |
| Example 2 | 0.94 | 0.02 | 0.04 | 0.183 | 700 | 204 | 87 |
| Example 3 | 0.94 | 0.02 | 0.04 | 0.235 | 720 | 204 | 84 |
| Example 4 | 0.94 | 0.01 | 0.05 | 0.082 | 700 | 204 | 88 |
| Example 5 | 0.94 | 0.01 | 0.05 | 0.119 | 720 | 204 | 85 |
| Example 6 | 0.94 | - | 0.06 | 0.215 | 740 | 204 | 83 |
| Comparative Example 4 | 0.94 | 0.02 | 0.04 | 0.399 | 760 | 204 | 49 |

As shown in Table 1, Example 1 using the lithium transition metal oxide where the proportion of Ni in the lithium transition metal oxide was 91 mol% relative to the total number of moles of metal elements except for Li, the proportion of Al in the lithium transition metal oxide was 6 mol% relative to the total number of moles of metal elements except for Li, and the amount of Al in the filtrate was 0.28 mg or less, exhibited a high capacity retention and was suppressed in deterioration in charge/discharge cycle characteristics, although exhibited the same battery capacity, as compared with Comparative Example 1 using the lithium transition metal oxide where, although the proportion of Ni and the proportion of Al were each the same as in Example 1, the amount of Al in the filtrate was more than 0.28 mg. Example 1 also exhibited a high battery capacity, as compared with Comparative Example 2 using the lithium transition metal oxide where the proportion of Ni in the lithium transition metal oxide was less than 91 mol% relative to the total number of moles of metal elements except for Li. Example 1 also exhibited a high capacity retention and was suppressed in deterioration in charge/discharge cycle characteristics, as compared with Comparative Example 3 using the lithium transition metal oxide where the proportion of Ni in the lithium transition metal oxide was more than 96 mol% relative to the total number of moles of metal elements except for Li.

As shown in Table 2, Examples 2 to 6 each using the lithium transition metal oxide where the proportion of Ni in the lithium transition metal oxide was 94 mol% relative to the total number of moles of metal elements except for Li, the proportion of Al in the lithium transition metal oxide was 4 to 6 mol% relative to the total number of moles of metal elements except for Li, and the amount of Al in the filtrate was 0.28 mg or less exhibited a high capacity retention and were suppressed in deterioration in charge/discharge cycle characteristics, although exhibited the same battery capacity, as compared with Comparative Example 4 using the lithium transition metal oxide where, although the proportion of Ni was the same as and the proportion of Al was substantially the same as in the above Examples, the amount of Al in the filtrate was more than 0.28 mg.

## Claims

1. A positive electrode active material for a non-aqueous electrolyte secondary battery, having:

    a lithium transition metal oxide including Ni and Al, wherein
    a proportion of Ni in the lithium transition metal oxide is 91 mol% to 96 mol% relative to the total number of moles of metal elements except for Li, and a proportion of Al in the lithium transition metal oxide is 4 mol% to 9 mol% relative to the total number of moles of metal elements except for Li, and
    an amount of Al in a filtrate as quantitatively determined by inductively coupled plasma emission spectrometry is 0.28 mg or less, the filtrate being collected by stirring a sample solution obtained by addition of 1 g of the lithium transition metal oxide to 10 mL of a mixed solution of 100 mL of pure water and 1 mL of 35% hydrochloric acid, and thereafter filtering the sample solution.

2. The positive electrode active material for a non-aqueous electrolyte secondary battery according to claim 1, wherein the lithium transition metal oxide is represented by general formula $Li_zNi_xM_{1-x-y}Al_yO_2$, wherein $0.91 \leq x \leq 0.96$, $0.04 \leq y \leq 0.09$, $0.95 \leq z \leq 1.10$, and M includes at least one element selected from the group consisting of Co, W, Nb, Mg, Ti, Mn and Mo.

3. The positive electrode active material for a non-aqueous electrolyte secondary battery according to claim 2, wherein the lithium transition metal oxide is represented by general formula $Li_zNi_xM_{1-x-y}Al_yO_2$, wherein $0.91 \leq x \leq 0.94$, $0.04 \leq y \leq 0.06$, $y \geq 2(1-x-y)$ or $(1-x-y) = 0$, $0.98 \leq z \leq 1.05$, and M includes at least one element selected from the group consisting of Co, W, Nb, Mg, Ti, Mn and Mo.

4. A method for producing the positive electrode active material for a non-aqueous electrolyte secondary battery including the lithium transition metal oxide according to claim 1, the method comprising:
    a step of mixing a composite oxide represented by general formula $NixM_{1-x-y}Al_yO_2$, wherein $0.91 \leq x \leq 0.96$, $0.04 \leq y \leq 0.09$, $0.95 \leq z \leq 1.10$, and M includes at least one element selected from the group consisting of Co, W, Nb, Mg, Ti, Mn and Mo, with a Li compound, and firing the resulting mixture at 700°C to 740°C, thereby obtaining the lithium transition metal oxide according to claim 1.

## Patentansprüche

1. Aktives Material für eine positive Elektrode für eine Sekundärbatterie mit nichtwässrigem Elektrolyt, aufweisend:

    ein Lithium-Übergangsmetalloxid, das Ni und Al enthält, wobei
    ein Anteil von Ni in dem Lithium-Übergangsmetalloxid 91 Mol-% bis 96 Mol-%, bezogen auf die Gesamtmolzahl der Metallelemente mit Ausnahme von Li, beträgt und ein Anteil von Al in dem Lithium-Übergangsmetalloxid 4 Mol-% bis 9 Mol-%, bezogen auf die Gesamtmolzahl der Metallelemente mit Ausnahme von Li, beträgt, und
    eine durch induktiv gekoppelte Plasma-Emissionsspektrometrie quantitativ bestimmte Menge an Al in einem Filtrat 0,28 mg oder weniger beträgt, wobei das Filtrat durch Rühren einer Probenlösung, die durch Zugabe von 1 g des Lithium-Übergangsmetalloxids zu 10 ml einer gemischten Lösung aus 100 ml reinem Wasser und 1 ml 35%iger Salzsäure erhalten wurde, und anschließendes Filtrieren der Probenlösung gewonnen wird.

2. Aktives Material der positiven Elektrode für eine Sekundärbatterie mit nichtwässrigem Elektrolyt nach Anspruch 1, wobei das Lithium-Übergangsmetalloxid durch die allgemeine Formel $Li_zNi_xM_{1-x-y}Al_yO_2$ dargestellt wird, wobei $0,91 \leq x \leq 0,96$, $0,04 \leq y \leq 0,09$, $0,95 \leq z \leq 1,10$, und M mindestens ein Element ausgewählt aus der Gruppe bestehend aus Co, W, Nb, Mg, Ti, Mn und Mo einschließt.

3. Aktives Material der positiven Elektrode für eine Sekundärbatterie mit nichtwässrigem Elektrolyt nach Anspruch 2, wobei das Lithium-Übergangsmetalloxid durch die allgemeine Formel $Li_zNi_xM_{1-x-y}Al_yO_2$ dargestellt wird, wobei $0,91 \leq x \leq 0,94$, $0,04 \leq y \leq 0,06$, $y \geq 2(1-x-y)$ oder $(1-x-y) = 0$, $0,98 \leq z \leq 1,05$, und M mindestens ein Element ausgewählt aus der Gruppe bestehend aus Co, W, Nb, Mg, Ti, Mn und Mo einschließt.

4. Verfahren zur Herstellung des aktiven Materials der positiven Elektrode für eine Sekundärbatterie mit nichtwässrigem Elektrolyt, das das Lithium-Übergangsmetalloxid nach Anspruch 1 enthält, wobei das Verfahren umfasst: einen Schritt des Mischens eines Verbundoxids, das durch die allgemeine Formel $Ni_xM_{1-x-y}Al_yO_2$ dargestellt wird, wobei $0,91 \leq x \leq 0,96$, $0,04 \leq y \leq 0,09$, $0,95 \leq z \leq 1,10$, und M mindestens ein Element ausgewählt aus der Gruppe bestehend aus Co, W, Nb, Mg, Ti, Mn und Mo einschließt, mit einer Li-Verbindung, und Brennen der resultierenden Mischung bei 700 °C bis 740 °C, wodurch das Lithium-Übergangsmetalloxid nach Anspruch 1 erhalten wird.


**Revendications**

1. Matériau actif d'électrode positive pour une batterie rechargeable à électrolyte non aqueux, ayant :

   un oxyde de lithium et de métal de transition contenant du Ni et de l'Al, dans lequel
   la proportion de Ni dans l'oxyde de lithium et de métal de transition est de 91 % en moles à 96 % en moles par rapport au nombre total de moles de métaux élémentaires à l'exception du Li, et la proportion d'Al dans l'oxyde de lithium et de métal de transition est de 4 % en moles à 9 % en moles par rapport au nombre total de moles de métaux élémentaires à l'exception du Li, et
   la quantité d'Al dans un filtrat, telle que déterminée quantitativement par spectrométrie d'émission à plasma à couplage inductif est de 0,28 mg ou moins, le filtrat étant collecté par agitation d'une solution échantillon obtenue par addition de 1 g de l'oxyde de lithium et de métal de transition à 10 ml d'une solution mixte de 100 ml d'eau pure et de 1 ml d'acide chlorhydrique à 35 %, et ensuite filtration de la solution échantillon.

2. Matériau actif d'électrode positive pour une batterie rechargeable à électrolyte non aqueux selon la revendication 1, dans lequel l'oxyde de lithium et de métal de transition est représenté par la formule générale $Li_zNi_xM_{1-x-y}Al_yO_2$ dans laquelle $0,91 \leq x \leq 0,96$, $0,04 \leq y \leq 0,09$, $0,95 \leq z \leq 1,10$, et M comprend au moins un élément choisi dans le groupe constitué par Co, W, Nb, Mg, Ti, Mn et Mo.

3. Matériau actif d'électrode positive pour une batterie rechargeable à électrolyte non aqueux selon la revendication 2, dans lequel l'oxyde de lithium et de métal de transition est représenté par la formule générale $Li_zNi_xM_{1-x-y}Al_yO_2$ dans laquelle $0,91 \leq x \leq 0,94$, $0,04 \leq y \leq 0,06$, $y \geq 2(1-x-y)$ ou $(1-x-y) = 0$, $0,98 \leq z \leq 1,05$, et M comprend au moins un élément choisi dans le groupe constitué par Co, W, Nb, Mg, Ti, Mn et Mo.

4. Procédé pour produire le matériau actif d'électrode positive pour une batterie rechargeable à électrolyte non aqueux contenant l'oxyde de lithium et de métal de transition selon la revendication 1, le procédé comprenant :
   une étape de mélange d'un oxyde composite représenté par la formule générale $Ni_xM_{1-x-y}Al_yO_2$ dans laquelle $0,91 \leq x \leq 0,96$, $0,04 \leq y \leq 0,09$, $0,95 \leq z \leq 1,10$, et M comprend au moins un élément choisi dans le groupe constitué par Co, W, Nb, Mg, Ti, Mn et Mo, avec un composé du Li, et la cuisson du mélange résultant à une température de 700°C à 740°C, ce qui donne ainsi l'oxyde de lithium et de métal de transition selon la revendication 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010044963 A
- JP 2016204239 A
- US 2013247363 A1